# EUROPÄISCHE PATENTSCHRIFT

(11) **EP 2 732 236 B1**
(45) Veröffentlichungstag und Bekanntmachung des Hinweises auf die Patenterteilung: **13.05.2020**
(21) Anmeldenummer: 12730446.7
(22) Anmeldetag: 18.06.2012
(51) Int. Cl.: G01B 11/22

(54) **OPTISCHE VORRICHTUNG UND VERFAHREN ZUR REIFENPRÜFUNG**
OPTICAL DEVICE AND METHOD FOR INSPECTING TIRES
DISPOSITIF ET PROCÉDÉ OPTIQUES DE CONTRÔLE DE PNEUMATIQUES

(30) Priorität: 11.07.2011 DE 102011078959; 15.02.2012 DE 102012202271
(43) Veröffentlichungstag der Anmeldung: 21.05.2014
(73) Patentinhaber: Beissbarth GmbH, 80993 München (DE)
(72) Erfinder: NOBIS, Guenter, 72622 Nuertingen (DE); ABRAHAM, Steffen, 31134 Hildesheim (DE); WENDT, Axel, 70599 Stuttgart (DE); KLAR, Michael, 74177 Bad Friedrichshall (DE)
(74) Vertreter: Schmitt-Nilson Schraud Waibel Wohlfrom Patentanwälte Partnerschaft mbB
(86) Internationale Anmeldenummer: PCT/EP2012/061596
(87) Internationale Veröffentlichungsnummer: WO 2013/007479

(56) Entgegenhaltungen:
- EP-A2- 0 816 799
- WO-A1-2010/131698
- DE-A1- 4 101 921
- DE-A1- 19 515 949
- US-A- 5 245 867
- US-A1- 2012 020 526

## Beschreibung

Die Erfindung betrifft eine Vorrichtung und ein Verfahren zur berührungslosen Prüfung und Profiltiefenbestimmung von Reifen eines Fahrzeugs, insbesondere eines Kraftfahrzeugs.

### Stand der Technik:

Zur berührungslosen Messung der Profiltiefe von Fahrzeugreifen sind eine Reihe von Verfahren und Vorrichtungen bekannt. Bei einigen dieser Verfahren erfolgt die Messung an einem demontierten Reifen, der in einem speziellen Prüfstand drehbar befestigt wird. Andere Verfahren messen die Profiltiefe am Fahrzeug montierter Reifen. Dies kann einerseits bei Überfahrt über einen im Boden oder in eine überfahrbare Rampe eingebauten Sensor erfolgen. Andererseits gibt es Verfahren zur Messung der Profiltiefe in einem Rollenprüfstand. Schließlich sind mobile handgehaltene Geräte zur Profilmessung bekannt.

US 3 918 816, US 5 245 867, US 5 249 460 und EP 1 515 129 B1 beschreiben Prüfstände zur Messung der Profiltiefe über die vollständige Lauffläche eines demontierten Reifens durch sequentielles Scannen der Reifenfläche mit einem Laserstrahl. Hierzu muss in kontrollierter Weise der Reifen rotiert und der Laserstrahl lateral mechanisch verschoben werden.

DE 41 01 921 beschreibt eine Reifenwuchtmaschine, mit der die Lauffläche eines Reifens durch ein Lichtschnittverfahren vermessen werden kann. Auch hier muss der demontierte Reifen rotiert werden.

DE 195 15 949 beschreibt die Profilmessung über die komplette Lauffläche eines demontierten Reifens durch ein Streifenprojektionsverfahren. Hierbei wird der Reifen auf eine Drehachse eines Prüfstands montiert und schrittweise in eine Reihe von Winkelstellungen gedreht. Für jede Winkelstellung wird ein flächiger Abschnitt der Lauffläche vermessen. Zur Bildaufnahme eines jeden Abschnitts muss sich der Reifen in einer Ruhelage befinden, da mehrere aufeinander folgende Aufnahmen mit unterschiedlicher Streifenbeleuchtung notwendig sind.

DE 1 809 459 beschreibt ein Lichtschnittverfahren zur Messung der Profiltiefe bei Überfahrt. Hierbei wird die Profiltiefe entlang einer einzelnen Linie parallel zur Drehachse des Reifens gemessen.

DE 43 16 984 beschreibt ein Verfahren zur Messung der Profiltiefe bei Überfahrt. Hierbei wird ein Triangulationssensor entlang einer Linie quer zur Abrollrichtung des Reifens verschoben.

EP 0 469 948 B1, EP 1 952 092 B1 und US 7 578 180 B2 beschreiben weitere Varianten von Triangulationsverfahren zur Profilmessung bei Überfahrt.

WO 97/07380 A2 beschreibt die Anwendung eines Lichtschnittverfahrens mit einem oder mehreren Lichtschnitten zur Messung bei Überfahrt oder in einem Rollensatz.

WO 96/10727 beschreibt ebenfalls ein Triangulationsverfahren zur Messung der Profiltiefe am Fahrzeug. Zusätzlich zur Profilmessung wird eine bildbasierte Visualisierung des Reifens vorgeschlagen. Zur Darstellung eines größeren Abschnitts der Lauffläche muss der Reifen aber in einem Rollensatz gedreht werden.

EP 0816799 A2 beschreibt u.a. eine Variante, bei der der Sensor am Fahrzeug befestigt wird und während der Bewegung des Fahrzeugs den Reifen scannt. Triangulationsverfahren mit Laserscannern zur Profiltiefenmessung in einem Rollenprüfstand werden in DE 197 05 047 A1 und EP 1 394 503 B1 beschrieben.

DE 295 08 978 beschreibt einen handgehaltenen Lasermesskopf zur Messung der Profiltiefe.

DE 10 2009 016 498 A1 offenbart ein Verfahren zum Ermitteln der Profiltiefe eines Fahrzeugreifens, wobei der Reifen an einem Fahrzeug montiert ist, bei dem der Reifen über eine Messstation gerollt oder auf ihr abgestellt wird. Das Profil des Reifens wird auf mindestens einer Messlinie quer zur Rollrichtung des Reifens optisch abgetastet, wobei ein von einer Lichtquelle ausgehender Strahlenfäeher an der Reifenoberfläche reflektiert wird und ein Signal des reflektierten Strahlenfächers von einem Sensor aufgenommen wird und das Signal des reflektierten Strahlenfächers mittels eines Triangulationsverfahrens ausgewertet wird. Dabei wird das Signal nicht-orthogonal zur Reifenoberfläche aufgenommen.

Allen genannten Verfahren ist gemeinsam, dass die Profiltiefe jeweils entlang einer einzelnen Linie oder nur auf einem kleinen Bereich der Reifenlauffläche gemessen wird, oder dass zur Messung eines größeren Bereichs der Reifenlauffläche das Rad demontiert, das Fahrzeug in einen Rollenprüfstand eingefahren oder der Sensor bewegt werden muss. Die Überprüfung eines größeren Bereichs der Lauffläche des Reifens ist daher mit erhöhtem Aufwand verbunden.

### Offenbarung der Erfindung:

Aufgabe der Erfindung ist es, eine Vorrichtung und ein Verfahren bereit zu stellen, die es ermöglichen, mit möglichst geringem Aufwand den Zustand eines größeren Bereichs der Lauffläche eines Reifens zu überprüfen.
Ein erfindungsgemäßes Verfahren zur Reifenprüfung umfasst die Schritte: Aufnehmen wenigstens eines 2D-Bildes wenigstens eines ersten Bereichs einer Lauffläche eines zu prüfenden Reifens; Bestimmen der Profiltiefe durch 3D-Profiltiefenmessung wenigstens eines zweiten Bereichs der Lauffläche des Reifens, wobei der zweite Bereich im ersten Bereich enthalten ist; Unterteilen des wenigstens einen 2D-Bildes in mehrere Bildabschnitte; Berechnen von Texturmerkmalen für jeden der Bildabschnitte; Zuordnen der wenigstens einen 3D-Profiltiefenmessung zu den Texturmerkmalen, wobei die wenigstens eine 3D-Profiltiefenmessung nur für eine begrenzte Anzahl der Bildabschnitte vorliegt; und Anzeigen der Profiltiefe des wenigstens einen 2D-Bildes des wenigstens einen ersten Bereichs und der Position der zweiten Bereichs im ersten Bereich.

Eine erfindungsgemäße Vorrichtung zur Reifenprüfung hat eine Kamera, die zur Aufnahme eines 2D-Bildes wenigstens eines Bereichs der Lauffläche eines zu prüfenden Reifens ausgebildet ist; eine optische Projektionsvorrichtung, die zur Beleuchtung wenigstens eines zweiten Bereichs der Lauffläche des zu prüfenden Reifens ausgebildet ist, wobei der zweite Bereich Teil des ersten Bereichs ist; eine Auswertvorrichtung, die ausgebildet ist, aus dem von der Kamera aufgenommen Bild die Profiltiefe des wenigstens einen zweiten Bereichs der Lauffläche des Reifens durch 3D-Profiltiefenmessung zu bestimmen; das wenigstens eine 2D-Bildes in mehrere Bildabschnitte zu

unterteilen; für jeden der Bildabschnitte Texturmerkmale zu berechnen; und die wenigstens eine 3D-Profiltiefenmessung den Texturmerkmalen zuzuordnen, wobei die wenigstens eine 3D-Profiltiefenmessung nur für eine begrenzte Anzahl der Bildabschnitte vorliegt. Die Vorrichtung umfasst auch eine Anzeigevorrichtung, die ausgebildet ist, die von der Auswertvorrichtung bestimmte Profiltiefe des 2D-Bildes des wenigstens einen ersten Bereichs der Lauffläche und die Position des zweiten Bereichs innerhalb des ersten Bereichs des Reifens anzuzeigen.

Durch die Kombination der Darstellung eines Bildes des ersten Bereichs mit dem Ergebnis der auf den zweiten Bereich begrenzten Profiltiefenmessung lässt sich erfindungsgemäß der gesamte erste Bereich der Lauffläche bewerten. Die optische Darstellung des ersten Bereichs der Lauffläche erlaubt die Erkennung großflächiger Verschleißmuster; dies ist durch die Erfassung kleiner Abschnitte, wie es im Stand der Technik üblich ist, nicht möglich. Eine großflächige und visuell aufbereitete zweidimensionale Bilddarstellung der Reifenlauffläche zusätzlich zur Profiltiefenmessung erlaubt dem Benutzer, einen ungleichförmigen Verschleiß, z.B. durch falsche Fahrwerkseinstellung, defekte Stossdämpfer o.ä., zu erkennen. Die flächenhafte Darstellung des Verschleißbildes erleichtert das Kundengespräch, um dem Kunden vorhandene Reifenmängel zu erläutern.

In einer Ausführungsform ist das aufbereitete 2D-Bild ein 2D-Grauwertbild oder ein 2D-Farbbild. Ein Grauwertbild und insbesondere ein Farbbild ermöglichen jeweils eine exakte Darstellung der Lauffläche, die es dem Servicetechniker ermöglicht, Mängel der Lauffläche gut zu erkennen.

In einer Ausführungsform erfolgt die Messung der Profiltiefe durch Triangulation, vorzugsweise unter Zuhilfenahme einer strukturierten Beleuchtung. Triangulation ist ein bekanntes und bewährtes Verfahren zur Bestimmung der Profiltiefe. Mit Hilfe einer strukturierten Beleuchtung kann die Messung besonders einfach und exakt durchgeführt werden.

In einer Ausführungsform schließt das Verfahren ein, die minimale Profiltiefe der Lauffläche zu bestimmen. Die minimale Profiltiefe ist ein besonders sicherheitsrelevanter Wert. Unterschreitet die minimale Profiltiefe einen vorgegebenen (z.B. gesetzlichen) Mindestwert, kann automatisch eine Warnmeldung ausgegeben werden, um zu verhindern, dass ein Unterschreiten des Mindestwertes übersehen wird.

In einer Ausführungsform schließt das Verfahren ein, eine Bildsequenz mit mehreren 2D-Bildern der Lauffläche des Reifen aufzunehmen, und aus den Bildern der Bildsequenz ein Bild eines größeren Bereichs der Lauffläche des Reifen zusammenzusetzen. In einer derartigen Ausführungsform kann ein besonders großer Bereich der Lauffläche überwacht werden; insbesondere kann ein Bereich überwacht werden, der größer als der Aufnahmebereich der Kamera ist.

In einer Ausführungsform schließt das Verfahren ein, charakteristische Merkmale der Lauffläche zu identifizieren und die Bilder der Bildsequenz anhand der charakteristischen Merkmale zusammenzusetzen. Die Nutzung charakteristischer Merkmale erlaubt eine effektive und zuverlässige Kombination der Bilder einer Bildsequenz zu einem größeren Gesamtbild.

In einer Ausführungsform schließt das Verfahren ein, die Bilder der Bildsequenz automatisch zu analysieren, um Aussagen über den Zustand der Lauffläche zu treffen. Durch eine automatisierte Analyse der Lauffläche kann die Reifenprüfung vereinfacht, beschleunigt und objektiviert werden. Insbesondere können subjektive Einflüsse und Fehleinschätzungen bei der Reifenprüfung durch Inaugenscheinnahme vermieden werden.

In einer Ausführungsform schließt das Verfahren ein, die zuvor bestimmte Profiltiefe bei der Analyse zu berücksichtigen. Durch die Berücksichtigung der zuvor bestimmten Profiltiefe können die Ergebnisse der automatischen Analyse noch weiter verbessert werden.

In einer Ausführungsform schließt das Verfahren ein, Texturmerkmale der Lauffläche zu identifizieren und mit vorab gespeicherten Texturmerkmalen zu vergleichen. Der Vergleich der aktuell gemessenen Texturmerkmale mit den Texturmerkmalen aus der Datenbank ermöglicht eine automatisierte Bewertung des Reifens. Hierbei können Verfahren aus dem maschinellen Lernen zum Einsatz kommen. Es kann ein Klassifikator trainiert werden, der die aktuell gemessenen Texturmerkmale einer bestehenden Klasse aus der Datenbank zuordnet. Durch den Vergleich der Texturmerkmale mit den Klassen der Datenbank ist eine Klassifikation des Reifentyps möglich. Weiterhin können bestimmte Schadensbilder und Abriebgrade klassifiziert bzw. erkannt werden.

Alternativ ist es auch möglich, die Texturmerkmale zwischen den 4 Reifen eines Fahrzeuges miteinander zu vergleichen. Damit kann erkannt werden, ob auf dem Fahrzeug z.B. unterschiedliche Reifen montiert wurden, oder unterschiedliche Verschleißzustände vorliegen.

Für die Strukturprojektion kann sowohl eine flächenhafte als auch eine linienhafte Strukturprojektion zum Einsatz kommen. Das Verfahren kann um eine automatisierte Bewertung des Laufflächenbildes, welche die Analyse des Abriebbildes und eines ggf. vorhandenen Abriebmusters, die Erkennung von Schadstellen und/oder Fremdkörpern beinhaltet, umfassen.

Die Erfindung wird im Folgenden anhand der beigefügten Figuren näher erläutert. Dabei zeigt:
Figur 1 schematisch den Aufbau einer erfindungsgemäßen Messvorrichtung;
Figur 2 eine kombinierte Darstellung erster Bereiche der Laufflächen aller vier Räder eines Fahrzeugs und der aus den aufgenommenen Bildern gewonnen Profildaten in jeweils einem zweidimensionalen Diagramm;
Figur 3 ein Verfahren zur Bildaufbereitung für die zweidimensionale Darstellung eines größeren Bereichs der Lauffläche des Reifens aus mehreren Bildern einer Bildsequenz;
Figur 4 eine der Figur 2 entsprechende Darstellungen eines Bereichs der Laufflächen und der Profiltiefen über einen auf der jeweiligen Lauffläche markierten zweiten Bereich.
Figur 5 schematisch den Ablauf eines Verfahrens zur automatisierten Bewertung einer Reifenlauffläche; und
Figur 6 schematisch die Kombination eines Intensitätsinformationen enthaltenden 2D-Bildes mit dem Ergebnis einer 3D-Profiltiefenmessung.

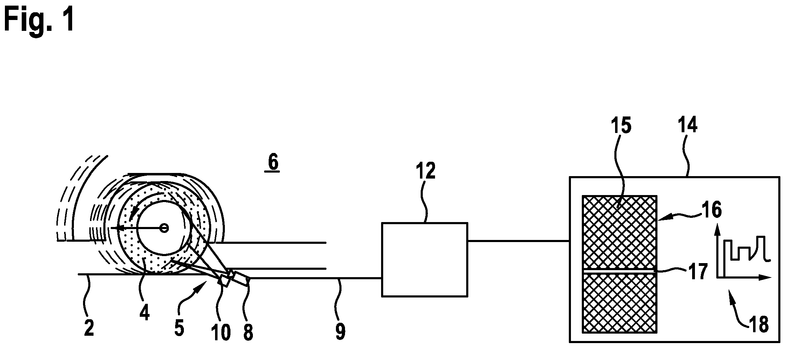

Figur 1 zeigt schematisch den Aufbau einer erfindungsgemäßen Messvorrichtung mit einer Ebene 2, auf der ein zu prüfender Reifen 4 eines Fahrzeugs 6 abrollt.

Unterhalb der Ebene 2 sind eine Kamera 8 und eine Strukturprojektionsvorrichtung 10 derart angeordnet, dass sie den auf der Ebene 2 abrollenden Reifen 4 optisch erfassen bzw. mit Licht bestrahlen können. Dazu ist in der Ebene 2 eine Öffnung 5 oder ein transparenter Bereich versehen. Die Kamera 8 und die Strukturprojektionsvorrichtung 10 können sich beispielsweise in einer im Boden unterhalb der Ebene 2 eingelassenen Grube oder auch innerhalb einer Konstruktion befinden, die mit dem Fahrzeug 6 überfahren wird. Alternativ können die Kamera 8 und die Strukturprojektionsvorrichtung 10 auch oberhalb der Ebene 2 derart angeordnet sein, dass diese die Lauffläche 16 des Reifens 4 optisch erfassen, ohne bei der Bewegung des Fahrzeugs 6 über die Ebene 2 mit diesem zu kollidieren. Die Bewegungsrichtung des Fahrzeugs 6 ist für die Erfassung unerheblich.

Die Kamera 8 erfasst während der Überfahrt des Reifens 4 die Reifenlauffläche 16 derart, dass über mehrere Bildaufnahmezeitpunkte zum einen ein durch die Strukturprojektionsvorrichtung 10 strukturiert beleuchteter zweiter Bereich und zum anderen ein nicht strukturiert beleuchteter erster Bereich der Reifenlauffläche 16 erfasst werden. Die Messung der Profiltiefe im zweiten, strukturiert beleuchteten Bereich setzt voraus, dass sich die Reifenlauffläche 16 direkt vor der Kamera 8 und der Strukturprojektionsvorrichtung 10 befindet. Zusätzlich erfasst die Kamera 8 zu allen anderen Zeitpunkten einen ersten Bereich 15 der Reifenlauffläche 16, der nicht strukturiert beleuchtet wird. Die Kamera 8 ist derart ausgerichtet, dass sie während der Überfahrtsbewegung des Fahrzeuges 6 direkt oder indirekt die Reifenlauffläche 16 zu mehreren Zeitpunkten optisch erfassen kann, so dass nach und nach ein großer Bereich bis hin zur gesamten Lauffläche 16 des Reifens 4 erfasst werden kann.

Die Kamera 8 ist über ein Datenkabel 9 mit einer Auswertvorrichtung 12 verbunden, welche die von der Kamera 8 aufgenommenen Bilder auswertet, aufarbeitet und die aufgearbeiteten Bilder bzw. die aus einer Analyse der Bilder gewonnen Messergebnisse auf einer optischen Anzeigevorrichtung 14 darstellt. Die Auswertvorrichtung 12 ist insbesondere ausgebildet, aus den von der Kamera 8 aufgenommenen Bildern des zweiten Bereichs 17, z.B. mit einem Triangulationsverfahren, die Profiltiefe im zweiten Bereich 17 über die gesamte Breite der Lauffläche 16 des Reifens 4 zu ermitteln.

In der Figur 1 zeigt die Anzeigevorrichtung 14 ein Bild eines ersten Bereichs 15 der Lauffläche 16 des Reifens 4, wobei der quer über die Lauffläche 16 verlaufende zweite Bereich 17, in dem aus den von der Strukturprojektionsvorrichtung 10 gemessenen Daten die Profiltiefe bestimmt worden ist, durch eine waagerecht über die Lauffläche 16 verlaufende Markierung 17 gekennzeichnet ist. Zusätzlich zeigt die Anzeigevorrichtung 14 in einem zweidimensionalen Diagramm 18 den Verlauf der Profiltiefe über die Breite der Lauffläche 16 in dem durch die Markierung gekennzeichneten zweiten Bereich 17.

Die Anzeigevorrichtung 14 ermöglicht es dem Benutzer, nicht nur die Profiltiefe der Lauffläche 16 in einem eng begrenzten lokalen zweiten Bereich 17 zu bestimmen, sondern sich gleichzeitig einen Gesamteindruck über einen erweiterten ersten Bereich 15 der Lauffläche 16 des Reifens 4 in der Umgebung des zweiten Bereichs 17, in dem die Profiltiefe gemessen worden ist, zu verschaffen. Der Gesamtzustand des Reifens 4 und insbesondere seiner Lauffläche 16 kann so besser als mit herkömmlichen Verfahren und Vorrichtungen bestimmt und beurteilt werden.

In einer möglichen Erweiterung der in der Figur 1 gezeigten Vorrichtung können alle vier Räder 4 eines Fahrzeugs 6 gleichzeitig betrachtet und miteinander verglichen werden. Dazu können vier Messkombinationen, die jeweils eine Kamera 8 und eine Strukturprojektionsvorrichtung 10 umfassen, vorgesehen sein, um eine gleichzeitige Aufnahme aller vier Räder 4 eines Fahrzeugs 6 vorzunehmen.

In einer kostengünstigeren Variante können auch nur zwei Messkombinationen aus Kamera 8 und Strukturprojektionsvorrichtung 10 vorgesehen sein, die jeweils nacheinander Bilder eines Vorderrades 4 und eines Hinterrades 4 des Fahrzeugs 6 aufnehmen, das über die Ebene 2 gefahren wird, so dass nacheinander die Vorderräder 4 und die Hinterräder 4 in den Aufnahmebereich der Kameras 8 und der Strukturprojektionsvorrichtung 10 gelangen. Die von den einzelnen Rädern 4 aufgenommenen Bilder und Strukturprojektionsdaten werden dann von der Auswertvorrichtung 12 zu einer gleichzeitigen Darstellung der Bilder und Messdaten aller vier Räder 4 des Fahrzeugs 6 kombiniert.

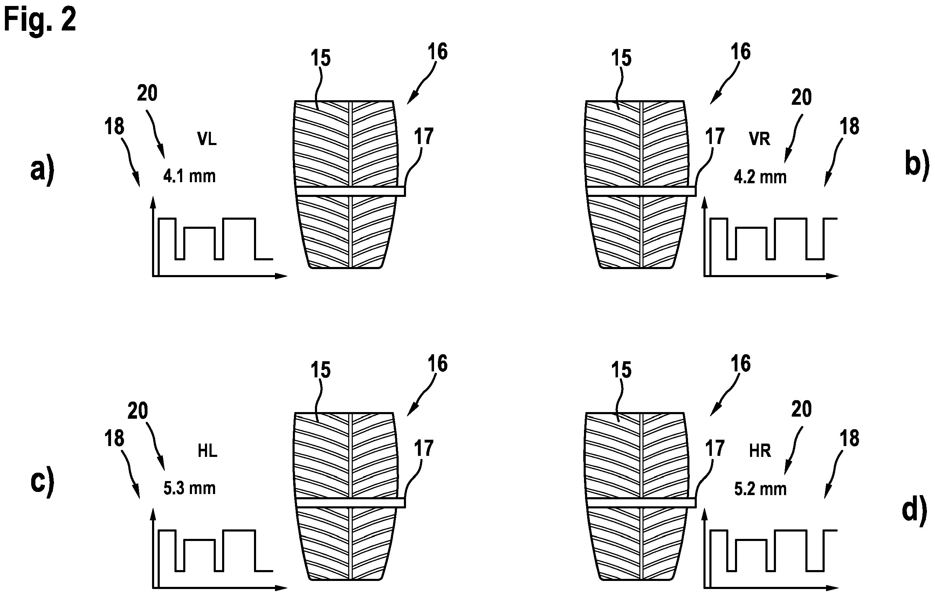

Die Figur 2 zeigt eine solche kombinierte Darstellung der ersten Bereiche 15 der Laufflächen 16 aller vier Räder 4 eines Fahrzeugs 6 und der aus den aufgenommenen Bildern gewonnen Profildaten in jeweils einem zweidimensionalen Diagramm 18.

Dabei zeigt die Figur 2a das linke Vorderrad, die Figur 2b das rechte Vorderrad, die Figur 2c das linke Hinterrad und die Figur 2d das rechte Hinterrad eines Fahrzeugs 6. In jeder der Figuren 2a bis 2d ist jeweils das Bild eines ersten Bereichs 15 der Lauffläche 16 des jeweiligen Rades 4, das von der optischen Kamera 8 aufgenommen worden ist, dargestellt. Durch einen quer über die Lauffläche 16 des jeweiligen Rades 4 verlaufenden Balken ist jeweils der zweite Bereich 17 der Lauffläche 16 markiert, für den mit Hilfe der Strukturprojektionsvorrichtung 10 die Profiltiefe der Lauffläche 16 des Reifens 4 ermittelt worden ist. Der waagerechte Verlauf des zweiten Bereichs 17 ist nur beispielhaft. Bei Bedarf ist auch eine andere, z.B. schräge Orientierung oder eine Orientierung des zweiten Bereichs 17 parallel zur Laufrichtung des Reifens 4 möglich.

In einem zweidimensionalen Profiltiefendiagramm 18, das neben dem jeweiligen Bild des ersten Bereichs 15 der Lauffläche 16 dargestellt ist, ist der Verlauf der Profiltiefe über die Breite der Lauffläche 16 in dem durch den Balken markierten zweiten Bereich 17 dargestellt. Durch die Kombination des Profiltiefendiagramms 18 mit der optischen Darstellung der Lauffläche 16 und der Markierung des zweiten Bereichs 17, in dem die Profiltiefe bestimmt worden ist, ist es dem Benutzer möglich, sich einen Gesamteindruck über die Qualität der Lauffläche 16 aller vier Räder 4 eines Fahrzeugs 6 zu verschaffen, ohne das Rad 4 zu demontieren.

Die Vorrichtung kann selbstverständlich problemlos auf Fahrzeuge, insbesondere Nutzfahrzeuge, erweitert werden, die mehr als zwei Achsen und demzufolge mehr als vier Räder 4 aufweisen, um gleichzeitig alle Räder 4 eines mehrachsigen Fahrzeugs 6 überprüfen zu können.

Oberhalb der Profiltiefendiagramme 18 ist jeweils das Minimum der über die Breite der Lauffläche 16 gemessenen Profiltiefe angezeigt. So kann besonders einfach und zuverlässig geprüft werden, ob eine minimal zulässige Profiltiefe unterschritten wird. Bei Unterschreiten einer vorgegebenen minimalen Profiltiefe kann zusätzlich ein optisches oder akustisches Warnsignal ausgegeben werden, z. B. indem der Wert für die minimale Profiltiefe 20 in einer anderen Farbe dargestellt wird. Auch kann die minimal zulässige Profiltiefe zusätzlich zur gemessenen Profiltiefe in dem Profiltiefendiagramm 18 dargestellt werden, so dass über dem gesamten Verlauf der Breite der Lauffläche 16 der Abstand der gemessenen Profiltiefe von der minimal zulässigen Profiltiefe erkennbar ist.

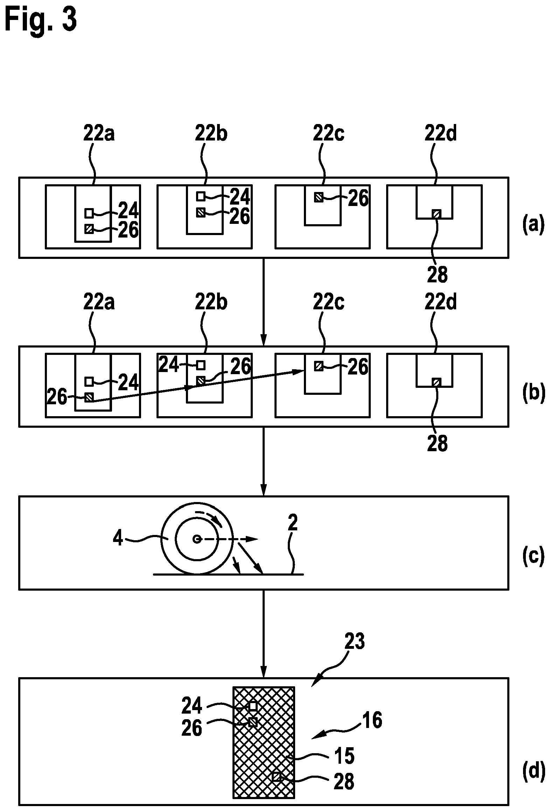

Ein Verfahren zur Bildaufbereitung für die zweidimensionale Darstellung eines größeren Bereichs der Lauffläche 16 des Reifens 4 aus mehreren Bildern einer Bildsequenz, insbesondere als Abwicklung der Lauffläche 16, ist in der Figur 3 gezeigt.

Hierzu werden bei der Überfahrt des Reifens 4 über die Ebene 2 mehrere Bilder des Reifens 4 aufgenommen, die aufgrund der Abrollbewegung des Reifens 4 jeweils einen anderen Bereich 22a bis 22d der Lauffläche 16 zeigen.

Diese Bilder einzelner Bereiche 22a bis 22d der Lauffläche 16 werden dann zu einem synthetischen Gesamtübersichtsbild 23 der Lauffläche 16 des Reifens 4 miteinander verrechnet. Dazu werden Methoden der Bildverarbeitung, wie sie unter dem Stichwort "Image Stitching" bekannt sind, verwendet.

Bei einer möglichen Variante zur Kombination der einzelnen Bilder der Bildsequenz werden markante Merkmale 24, 26, 28 der Lauffläche 16 des Reifens 4, die jeweils in mehreren der Bilder vorhanden sind, verwendet. Die Bewegung dieser Merkmale 24, 26, 28 im Verlauf der Bildsequenz wird identifiziert ("Merkmalstracking"), so dass die verschiedenen Bilder auf Grundlage der identifizierten Merkmale 26 miteinander kombiniert werden können, um ein Übersichtsbild 23 eines größeren Bereichs der gesamten Lauffläche 16 des Reifens 4 zu erhalten. Im Gegensatz zu den in der Figur 2 gezeigten Bildern erster Bereiche 15 der Lauffläche 16 ist in der Figur 3d ein Übersichtsbild 23 einer abgewickelten Lauffläche 16 dargestellt, das mithilfe von geometrischen und radiometrischen Transformationsparametern berechnet worden ist, die aus der Bewegung der charakteristischen Merkmale 24, 26, 28 in den Bildern 22a bis 22d bestimmt worden sind. Das Übersichtsbild 23 zeigt einen größeren Bereich der Lauffläche 16 als die Bilder der ersten Bereich 15.

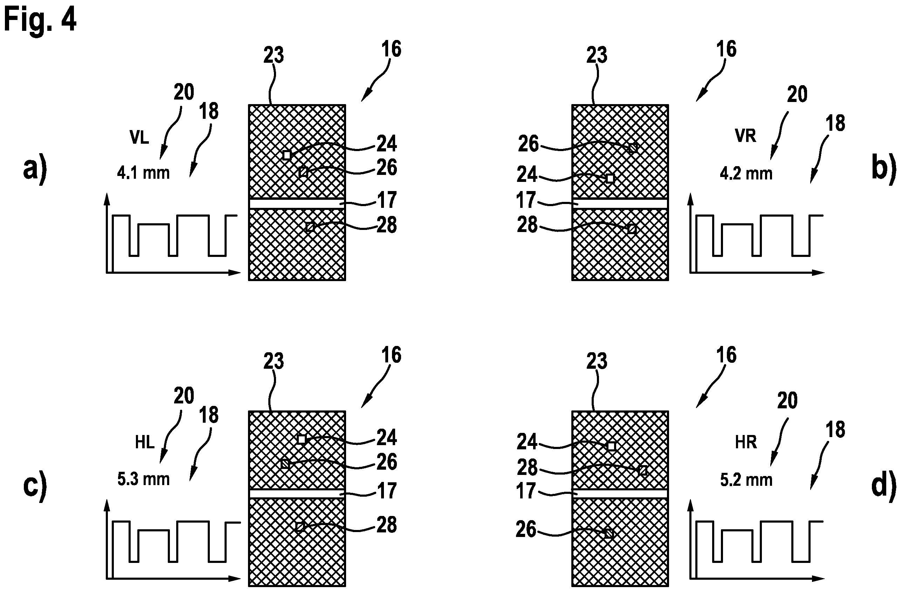

Die Figur 4 zeigt der Figur 2 entsprechende Darstellungen eines Bereichs der Lauffläche 16 und der Profiltiefe über einen auf der jeweiligen Lauffläche 16 markierten zweiten Bereich 17, wobei anstelle der unmittelbar aufgenommenen Bilder der ersten Bereiche 15 der Laufflächen 16 der einzelnen Reifen 4, wie sie in den Figuren 2a bis 2d gezeigt sind, jeweils Übersichtsbilder 23 der Laufflächen 16 gezeigt sind. Die Übersichtsbilder sind anhand charakteristischer Merkmale 24, 26, 28, wie sie im Zusammenhang mit der Figur 3 beschrieben worden sind, aus den einzelnen Bildern einer Bildsequenz, die von einer dem jeweiligen Reifen 4 zugeordneten Kamera 8 aufgenommen worden ist, zusammengesetzt worden und zeigen jeweils ein abgewickeltes Gesamtbild eines größeren Bereichs der jeweiligen Lauffläche 16.

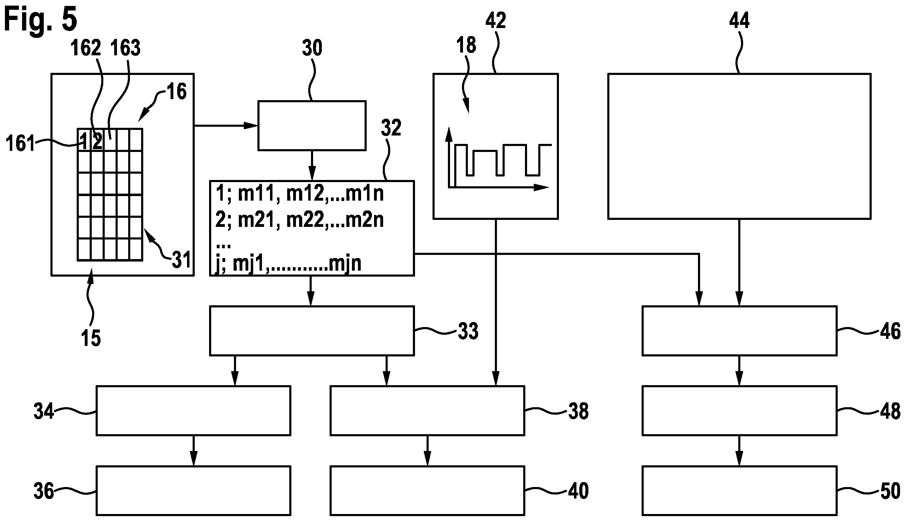

Figur 5 zeigt schematisch den Ablauf eines Verfahrens zur automatisierten Bewertung der Reifenlauffläche 16. Für die automatisierte Bewertung wird ein 2D-Abbild 31 eines Bereiches 15 der Reifenlauffläche 16 verwendet. Das 2D-Abbild 31 kann ein Bild mit Intensitätsinformationen (Grauwertbild) oder auch ein Bild mit Farbinformationen sein. Das 2D-Abbild 31 kann, wie zuvor im Zusammenhang mit der Figur 3 beschrieben, aus einer Folge von mehreren Bildern zusammengesetzt worden sein. Zusätzlich kann eine ggf. vorhandene Messung der Profiltiefe in den Auswerteprozess einbezogen werden.

In Figur 5 ist das 2D-Abbild 31 der Reifenlauffläche 16 gleichförmig in eine Anzahl von Bildabschnitten 161, 162, 163, ... unterteilt. Zur Auswertung des 2D-Abbildes 31 der Reifenlauffläche 16 werden in einem ersten Schritt "Merkmalsberechnung" 30 zunächst für jeden der Bildabschnitte 161, 162, 163, ... systematisch Texturmerkmale m11, m12, ... berechnet.

Bei der Merkmalsberechnung 30 kommen vorzugsweise Standardverfahren aus der Bildanalyse zum Einsatz. So kann für jeden der Bildabschnitte 161, 162, 163, ... z.B. eine Fouriertransformation der Intensitätsinformation berechnet werden. Die auf diese Weise erhaltenen Fourierkoeffizienten stellen dann die Texturmerkmale m11, m12, ... dar.

Alternative Texturmerkmale m11, m12, ... können z.B. das Ergebnis einer Filterung mit Gradientenfiltern oder komplexen Filtern, wie beispielsweise Gabor-Wavelets, Haar-Wavelets usw., sein.

In einer Ausführungsform der intelligenten Auswertung werden für die Bewertung der Reifenlauffläche 16 im Schritt 33 die Texturmerkmale m11, m12, ... zwischen verschiedenen Bildabschnitten 161, 162, 163, ... miteinander verglichen.

So ist z.B. eine einfache statistische Auswertung der Texturmerkmale m11, m12, ... über die Reifenlauffläche 16 möglich. Es lassen sich zu jedem Texturmerkmal m11, m12, ... aus allen Bildabschnitten 161, 162, 163, ... ein Mittelwert und eine Standardabweichung berechnen. Für jeden Bildabschnitt 161, 162, 163, ... kann dann bestimmt werden, ob eine signifikante Abweichung vom Mittelwert und der Standardabweichung vorliegt (Schritt 34). So können Defekte in der Lauffläche 16 des Reifens 4 erkannt und ggf. angezeigt werden (Schritt 36).

Mit bekannten Verfahren kann beispielsweise eine Regression der Merkmale m11, m12, ... durchgeführt werden, um einen ungleichförmigen Verschleiß zu erkennen. Auffällige Bereiche können dann beispielsweise im Bild 22a, 22b, 22c, 22d, 23 der Lauffläche 16 des Reifens 4 (siehe Fig. 3) visualisiert werden.

Auch können bekannte Verfahren aus dem maschinellen Lernen, wie z.B. "Nearest-Neighbour-Klassifikation" oder Clusterverfahren eingesetzt werden, um die Merkmalsvektoren der einzelnen Bildabschnitte 161, 162, 163, ... miteinander zu vergleichen, um einen ggf. vorhandenen ungleichförmigen Verschleiß zu erkennen.
In einem weiteren Schritt 38 der automatischen Analyse wird die für einen begrenzten Abschnitt 17 der Reifenlauffläche 16 vorhandene 3D-Profiltiefenmessung 18 mit in die Bewertung einbezogen, um auffällige Bereiche der Lauffläche 16 des Reifens 4 zu identifizieren und in einem folgenden Schritt 40 darzustellen.

Für eine begrenzte Anzahl von Bildabschnitten liegen 3D-Profiltiefenmessungen 18 vor. Diese 3D-Profiltiefenmessungen 18 werden den Texturmerkmalen m11, m12, ... zugeordnet. So kann auch eine Aussage über den Zustand des 3D-Reifenprofils getroffen werden.

Unter der Annahme, dass die Profilstruktur in Laufrichtung des Reifens 4 gleichbleibend ist, kann bei einer gleichbleibenden Profiltiefe davon ausgegangen werden, dass sich die Texturmerkmale m11, m12, ... in Laufrichtung nicht signifikant verändern.

Darüber hinaus kann eine Extrapolation der 3D-Information zur Abschätzung der 3D-Tiefe für nicht explizit gemessene Bereiche der Reifenlauffläche 16 dienen. Werden Veränderungen in den Texturmerkmalen m11, m12, ... festgestellt, kann ein ungleichförmiger Verschleiß der Lauffläche 16 des Reifens 4 festgestellt und klassifiziert werden.

Ein weiterer Schritt der Texturanalyse umfasst, die Texturmerkmale m11, m12, ... für Bildabschnitte aus einer größeren Menge von unterschiedlichen Reifen 4 mit unterschiedlichen Profilmustern, Abriebgraden und auch Schadensbildern in einer Datenbank 44 zu sammeln.

Ein Vergleich der aktuell gemessenen Texturmerkmale m11, m12, ... mit den in der Datenbank 44 gesammelten Texturmerkmalen (Schritt 46) ermöglicht es, die Lauffläche 16 des Reifens 4 automatisch zu bewerten. Hierbei können wiederum Verfahren aus dem maschinellen Lernen zum Einsatz kommen. Es kann insbesondere ein Klassifikator trainiert werden, der die aktuell gemessenen Texturmerkmale m11, m12, ... einer bestehenden Klasse in der Datenbank 44 zuordnet (Schritt 48).

Durch den Vergleich der Texturmerkmale m11, m12, ... mit den Klassen der Datenbank 44 in einem Schritt 50 ist zusätzlich auch eine Klassifikation des Reifentyps möglich. Weiterhin können bestimmte Schadensbilder und Abriebgrade klassifiziert und erkannt werden.

Alternativ ist es auch möglich, die Texturmerkmale m11, m12, ... der verschiedenen Reifen 4 eines Fahrzeuges miteinander zu vergleichen. Auf diese Weise kann erkannt werden, ob an dem Fahrzeug z.B. unterschiedliche Reifen 4 montiert wurden und/oder unterschiedliche Verschleißzustände vorliegen.

Mit dem beschriebenen Verfahren können auf die zuvor beschriebene Weise u.a. die folgenden Funktionen realisiert werden:
- Erkennung ungleichförmigen Abriebs, z.B. durch Nutzung von Bildmerkmalen wie lokaler Kontrast, Kantenstärke, Kantenschärfe, Textur: starker Abrieb bedeutet weniger lokaler Kontrast, weniger scharfe Kanten. Aufteilung in Patches, Vergleich der Patches untereinander. Training eines Klassifikators. Klassifikation der Reifenfläche in verschiedene Abriebsgrade
- Erkennung fehlerhafter Achseinstellung und/oder fehlerhafter Stoßdämpfer
- Klassifikation des Reifentyps (z.B. durch Berechnung von Texturmerkmalen, Segmentierung der Profilrillen über Grauwerte, Analyse der Breite, Orientierung und Häufigkeit der Rillen, Training eines Klassifkators)
- Erkennung von Beschädigungen sowie von Unter- bzw. Überdruck

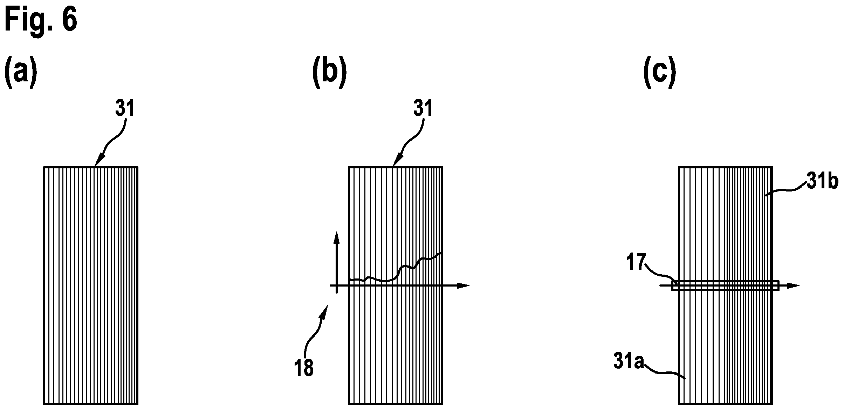

Die Figuren 6(a), 6(b) und 6(c) zeigen schematisch die zuvor im Zusammenhang mit dem Schritt 38 beschriebene Kombination des Intensitätsinformationen enthaltenden 2D-Bildes 31 mit dem Ergebnis der 3D-Profiltiefenmessung 18.

Figur 6(a) zeigt schematisch eine Zunahme des Kontrastes bzw. der Textur des 2D-Bildes 31 der Reifenlauffläche 16 von links nach rechts.

In der Figur 6(b) ist dem 2D-Bild 31 der Lauffläche 16 eines Reifens 4 das Ergebnis 18 einer 3D-Profiltiefenmessung überlagert.

Aus der Kombination des 2D-Bildes 31 mit dem Ergebnis 18 der 3D-Profiltiefenmessung kann gefolgert werden, dass der in der Figur 6(c) links dargestellte Bereich 31a wahrscheinlich über seine gesamte Länge (in den Figuren 6(a)-(c) von oben nach unten) eine nicht ausreichende Profiltiefe aufweist, wogegen der in den Figuren 6(a)-(c) jeweil rechts dargestellte Bereich 31b mit hoher Wahrscheinlichkeit über seine gesamte Länge eine ausreichende Profiltiefe aufweist, obwohl die Profiltiefe nur über einen kleinen Bereich 17 der Lauffläche 16 gemessen worden ist.

## Patentansprüche

1. Verfahren zur Reifenprüfung mit den Schritten:
Aufnehmen wenigstens eines 2D-Bildes (31) wenigstens eines ersten Bereichs (15) einer Lauffläche (16) eines zu prüfenden Reifens (4);
Bestimmen der Profiltiefe durch 3D-Profiltiefenmessung (31) wenigstens eines zweiten Bereichs (17) der Lauffläche (16) des Reifens (4), wobei der zweite Bereich (17) im ersten Bereich (15) enthalten ist;
Unterteilen des wenigstens einen 2D-Bildes (31) in mehrere Bildabschnitte (161, 162, 163);
Berechnen von Texturmerkmalen für jeden der Bildabschnitte (161, 162, 163);
Zuordnen der wenigstens einen 3D-Profiltiefenmessung (31) zu den Texturmerkmalen, wobei die wenigstens eine 3D-Profiltiefenmessung (31) nur für eine begrenzte Anzahl der Bildabschnitte vorliegt; und
Anzeigen der Profiltiefe des wenigstens einen zweiten Bereichs (17), des wenigstens einen 2D-Bildes (31) des wenigstens einen ersten Bereichs (15) und der Position des zweiten Bereichs (17) im ersten Bereich (15).

2. Verfahren nach Anspruch 1, wobei das 2D-Bild (31) ein 2D-Grauwertbild oder ein 2D-Farbbild ist.

3. Verfahren nach einem der vorangehenden Ansprüche, wobei das Verfahren umfasst, wenigstens den zweiten Bereich (17) der Lauffläche (16) des Reifens (4) strukturiert zu beleuchten.

4. Verfahren nach einem der vorangehenden Ansprüche, wobei das Verfahren einschließt, die minimale Profiltiefe (20) des zweiten Bereichs (17) der Lauffläche (16) zu bestimmen und anzuzeigen.

5. Verfahren nach einem der vorangehenden Ansprüche, wobei das Verfahren einschließt,
eine Bildsequenz mit mehreren 2D-Bilder (22a, 22b, 22c, 22d) verschiedener Bereiche der Lauffläche (16) des Reifens (4) aufzunehmen, und
aus den 2D-Bildem (22a, 22b, 22c, 22d) der Bildsequenz ein Übersichtsbild eines größeren Bereichs der Lauffläche (16) des Reifens (4) zusammenzusetzen, und
das Übersichtsbild anzuzeigen.

6. Verfahren nach Anspruch 5, wobei das Verfahren einschließt, charakteristische Merkmale (24, 26, 28) der Lauffläche (16) zu identifizieren und die 2D-Bilder (22a, 22b, 22c, 22d) der Bildsequenz anhand der charakteristischen Merkmale (24, 26, 28) zu einem Übersichtsbild zusammenzusetzen.

7. Verfahren nach Anspruch 5 oder 6, wobei das Verfahren einschließt, die 2D-Bilder (22a, 22b, 22c, 22d) der Bildsequenz automatisch zu analysieren, um Aussagen über den Zustand der Lauffläche (16) zu treffen.

8. Verfahren nach Anspruch 7, wobei das Verfahren einschließt, die zuvor bestimmte Profiltiefe bei der Analyse zu berücksichtigen und/oder Texturmerkmale der Lauffläche (16) zu identifizieren und mit vorab gespeicherten Texturmerkmalen zu vergleichen und/oder die Texturmerkmale der Reifen eines Fahrzeugs miteinander zu vergleichen.

9. Vorrichtung zur Reifenprüfung mit
wenigstens einer Kamera (8), die zur Aufnahme eines 2D-Bildes (31) wenigstens eines ersten Bereichs der Lauffläche (16) eines zu prüfenden Reifens (4) ausgebildet ist;
einer optischen Projektionsvorrichtung (10), die zur Beleuchtung wenigstens eines zweiten Bereichs (17) der Lauffläche (16) des zu prüfenden Reifens (4) ausgebildet ist, wobei der zweite Bereich (17) im ersten Bereich enthalten ist;
einer Auswertvorrichtung (12), die ausgebildet ist:
aus dem von der Kamera (8) aufgenommenen 2D-Bild (31) die Profiltiefe des wenigstens einen zweiten Bereichs (17) der Lauffläche (16) des Reifens (4) durch 3D-Profiltiefenmessung zu bestimmen;
das wenigstens eine 2D-Bild (31) in mehrere Bildabschnitte (161, 162, 163) zu unterteilen;
für jeden der Bildabschnitte (161, 162, 163) Texturmerkmale zu berechnen; und
die wenigstens eine 3D-Profiltiefenmessung (31) den Texturmerkmalen zuzuordnen, wobei die wenigstens eine 3D-Profiltiefenmessung (31) nur für eine begrenzte Anzahl der Bildabschnitte vorliegt; und
einer Anzeigevorrichtung, die ausgebildet ist, die von der Auswertvorrichtung (12) bestimmte Profiltiefe des wenigstens einen zweiten Bereichs (17), das 2D-Bild (31) des wenigstens einen ersten Bereichs (15) der Lauffläche (16) und die Position des zweiten Bereichs (17) innerhalb des ersten Bereichs (15) des Reifens (4) anzuzeigen.

10. Vorrichtung nach Anspruch 9, wobei die Auswertvorrichtung (12) zusätzlich ausgebildet ist, das aufgenommene 2D-Bild (31) zu analysieren, um Aussagen über den Zustand der Lauffläche (16) zu treffen.

## Claims

1. A method for inspecting tires, comprising the steps of:
taking at least one 2D image (31) of at least one first area (15) of a tread (16) of a tire (4) that is to be inspected;
determining a profile depth of at least one second area (17) of the tread (16) of the tire (4) by 3D profile depth measurement (18), with the second area (17) being included in the first area (15);
dividing the at least one 2D image (31) into a plurality of image sections (161, 162, 163);
calculating texture features for each of the image sections (161, 162, 163); assigning the at least one 3D profile depth measurement (18) to the texture features, with the at least one 3D profile depth measurement being present for a limited number of the image sections only; and
displaying the profile depth of the at least one second area (17), the at least one 2D image (31) of the at least one first area (15) and the position of the second area (17) in the first area (15).

2. The method according to claim 1,
wherein the 2D image (31) is a 2D gray-scale image or a 2D color image.

3. The method according to any of the preceding claims,
further comprising illuminating at least the second area (17) of the tread (16) of the tire (4) in structured manner.

4. The method according to any of the preceding claims,
further comprising determining and displaying the minimum profile depth (20) of the second area (17) of the tread (16).

5. The method according to any of the preceding claims,
further comprising taking an image sequence having a plurality of 2D images (22a, 22b, 22c, 22d) of different areas of the tread (16) of the tire (4), and composing an overview image of a greater area of the tread (16) of the tire (4) from the 2D images (22a, 22b, 22c, 22d) of the image sequence, and displaying the overview image.

6. The method according to claim 5,
further comprising identifying characteristic features (24, 26, 28) of the tread (16) and composing the 2D images (22a, 22b, 22c, 22d) of the image sequence to form the overview image with the aid of the characteristic features (24, 26, 28).

7. The method according to claim 5 or 6,
further comprising analyzing the 2D images (22a, 22b, 22c, 22d) of the image sequence automatically, so as to arrive at statements on the condition of the tread (16).

8. The method according to claim 7,
further comprising taking into account the previously determined profile depth in the analysis and/or identifying texture features of the tread (16) and comparing the same with previously stored texture features and/ or comparing the texture features of the tires of a vehicle to one another.

9. A device for inspecting tires, comprising:
at least one camera (8) adapted to take a 2D image (31) of at least one first area of the tread (16) of a tire (4) that is to be inspected,
an optical projection device (10) adapted to illuminate at least one second area (17) of the tread (16) of the tire (4) that is to be inspected, the second area (17) being included in the first area,
an evaluation device (12) configured for:
determining, by 3D profile depth measurement, the profile depth of the at least one second area (17) of the tread (16) of the tire (4) from the 2D image (31) taken by the camera (8);
dividing the at least one 2D image (31) into a plurality of image sections (161, 162, 163);
calculating texture features for each of the image sections (161, 162, 163);
and
assigning the at least one 3D profile depth measurement (18) to the texture features, with the at least one 3D profile depth measurement being present for a limited number of image sections only; and
a display device adapted to display the profile depth of at least one second area (17) determined by the evaluation device (12), the 2D image (31) of the at least one first area (15) of the tread (16), and the position of the second area (17) within the first area (15) of the tire (4).

10. The device according to claim 9,
wherein the evaluation device (12) is further configured to analyze the 2D image (31) taken, so as to arrive at statements on the condition of the tread (16).

## Revendications

1. Procédé de contrôle de pneumatiques comprenant les étapes suivantes :
enregistrement d'au moins une image en 2D (31) d'au moins une première zone (15) d'une surface de roulement (16) d'un pneumatique (4) à contrôler ;
détermination de la profondeur de sculpture (18) d'au moins une deuxième zone (17) de la surface de roulement (16) du pneumatique (4) par mesure en 3D de la profondeur de sculpture (18), la deuxième zone (17) étant contenue dans la première zone (15) ;
division de l'image en 2D (31), une au moins, en plusieurs parties (161, 162, 163) ;
calcul de caractéristiques de texture pour chacune des parties d'image (161, 162, 163) ;
association de la mesure en 3D de la profondeur de sculpture (18), une au moins, aux caractéristiques de texture, sachant que la mesure en 3D de la profondeur de sculpture (18), une au moins, n'existe que pour un nombre limité de parties de l'image ;
affichage de la profondeur de sculpture de la deuxième zone (17), une au moins, de l'image en 2D (31), une au moins, de la première zone (15) au moins et de la position de la deuxième zone (17) dans la première zone (15).

2. Procédé selon la revendication 1, **caractérisé en ce que** l'image en 2D (31) est une image en 2D à niveaux de gris ou une image en 2D en couleur.

3. Procédé selon l'une quelconque des revendications précédentes, **caractérisé en ce que** le procédé englobe l'éclairage structuré de la deuxième zone (17) au moins de la surface de roulement (16) du pneumatique (4).

4. Procédé selon l'une quelconque des revendications précédentes, **caractérisé en ce que** le procédé inclut la détermination et l'affichage de la profondeur de sculpture minimale (20) de la deuxième zone (17) de la surface de roulement (16).

5. Procédé selon l'une quelconque des revendications précédentes, **caractérisé en ce que** le procédé inclut l'enregistrement d'une séquence d'images avec plusieurs images en 2D (22a, 22b, 22c, 22d) de différentes zones de la surface de roulement (16) du pneumatique (4) et la composition, à partir des images en 2D (22a, 22b, 22c, 22d) de la séquence d'images, d'une image d'ensemble d'une zone plus grande de la surface de roulement (16) du pneumatique (4), ainsi que l'affichage de ladite image d'ensemble.

6. Procédé selon la revendication 6, **caractérisé en ce que** le procédé inclut l'identification d'éléments caractéristiques (24, 26, 28) de la surface de roulement (16) et la réunion des images en 2D (22a, 22b, 22c, 22d) de la séquence d'images en une image d'ensemble à partir des éléments caractéristiques (24, 26, 28).

7. Procédé selon la revendication 5 ou 6, **caractérisé en ce que** le procédé inclut l'analyse automatique des images en 2D (22a, 22b, 22c, 22d) de la séquence d'images afin d'en tirer des conclusions sur l'état de la surface de roulement (16).

8. Procédé selon la revendication 7, **caractérisé en ce que** le procédé inclut la prise en compte dans l'analyse de la profondeur de sculpture précédemment déterminée et/ou l'identification de caractéristiques de texture de la surface de roulement (16) et leur comparaison avec des caractéristiques de texture préalablement enregistrées et/ou la comparaison des caractéristiques de texture des pneumatiques d'un véhicule les unes avec les autres.

9. Dispositif de contrôle de pneumatiques comprenant
au moins une caméra (8) réalisée de manière à enregistrer une image en 2D (31) d'au moins une première zone de la surface de roulement (16) d'un pneumatique (4) à contrôler ;
un dispositif de projection optique (10) réalisé de manière à éclairer au moins une deuxième zone (17) de la surface de roulement (16) du pneumatique (4) à contrôler, la deuxième zone (17) étant contenue dans la première zone ;
un dispositif d'évaluation (12) réalisé de manière à :
déterminer, à partir de l'image en 2D (31) enregistrée par la caméra (8), la profondeur de sculpture de la deuxième zone au moins (17) de la surface de roulement (16) du pneumatique (4) par la mesure en 3D de la profondeur de sculpture ;
diviser l'image en 2D (31), une au moins, en plusieurs parties (161, 162, 163) ;
calculer pour chacune des parties d'image (161, 162, 163) des caractéristiques de texture ; et
associer la mesure en 3D de la profondeur de sculpture (18), une au moins, aux caractéristiques de texture, sachant que la mesure en 3D de la profondeur de sculpture (18), une au moins, n'existe que pour un nombre limité de parties de l'image ; et
un dispositif d'affichage réalisé de manière à afficher la profondeur de sculpture de la deuxième zone (17), une au moins, de l'image en 2D (31) de la première zone (15), une au moins, de la surface de roulement (16) déterminée par le dispositif d'évaluation, ainsi que la position de la deuxième zone (17) au sein de la première zone (15) du pneumatique (4).

10. Dispositif selon la revendication 9, **caractérisé en ce que** le dispositif d'évaluation (12) est en outre réalisé de manière à analyser l'image en 2D (31) enregistrée afin d'en tirer des conclusions sur l'état de la surface de roulement (16).
